# EUROPEAN PATENT SPECIFICATION

(11) **EP 4 498 445 B1**
(45) Date of publication and mention of the grant of the patent: **03.06.2026**
(21) Application number: 24182790.6
(22) Date of filing: 18.06.2024
(51) Int. Cl.: H01M 4/133, H01M 4/36, H01M 4/587, H01M 10/0525, H01M 10/054, H01M 4/62, H01M 4/02

(54) **NEGATIVE ELECTRODE SHEET, BATTERY, AND ELECTRICITY-CONSUMPTION DEVICE**
NEGATIVELEKTRODENFOLIE, BATTERIE UND STROMVERBRAUCHSVORRICHTUNG
FEUILLE D'ÉLECTRODE NÉGATIVE, BATTERIE ET DISPOSITIF DE CONSOMMATION D'ÉLECTRICITÉ

(30) Priority: 26.07.2023 CN 202310922205
(43) Date of publication of application: 29.01.2025
(73) Proprietor: Hithium Tech HK Limited, Hong Kong (HK)
(72) Inventor: PENG, Fuxi, Shenzhen City, 518110 (CN); ZHANG, Qin, Shenzhen City, 518110 (CN)
(74) Representative: Santarelli

(56) References cited:
- EP-A1- 3 951 949
- WO-A1-2022/206175
- CN-A- 111 426 724
- CN-A- 114 384 112
- MUKAI KAZUHIKO ET AL: "Distinguishing the thermal behavior of Na- and Li-intercalated hard carbons via differential scanning calorimetry", ELECTROCHEMISTRY COMMUNICATIONS, vol. 88, 9 February 2018 (2018-02-09), NL, pages 101 - 104, XP093251660, ISSN: 1388-2481, DOI: 10.1016/j.elecom.2018.02.006
- ROTH E P ET AL: "DSC investigation of exothermic reactions occurring at elevated temperatures in lithium-ion anodes containing PVDF-based binders", JOURNAL OF POWER SOURCES, ELSEVIER, AMSTERDAM, NL, vol. 134, no. 2, 12 August 2004 (2004-08-12), pages 222 - 234, XP004521732, ISSN: 0378-7753, DOI: 10.1016/J.JPOWSOUR.2004.03.074

## Description

### TECHNICAL FIELD

This disclosure relates to the technical field of electrode materials, and in particular to a negative electrode sheet, a battery, and an electricity-consumption device.

### BACKGROUND

Currently, a secondary battery (such as a lithium-ion battery and a sodium-ion battery) is widely used in fields such as electric vehicles, portable mobile devices, and aerospace because the secondary battery has high energy density, a long service life, no memory effect, a low self-discharge rate, etc. However, the secondary battery still has serious safety concerns. Smoking, combustion, explosion, and other safety accidents caused by thermal runaway of the battery are the most common concerns.

In Mukai Kazuhiko et al, "Distinguishing the thermal behavior of Na- and Li-intercalated hard carbons via differential scanning calorimetry", Electrochemistry Communications, vol. 88, pages 101-104, the thermal stabilities of Na- and Li-intercalated hard carbons were examined by differential scanning calorimetry (DSC) to determine whether Na-ion batteries or Li-ion batteries exhibit superior thermal stability. The DSC profiles of both C₆Na_{0.65} and C₆Li_{0.65} displayed sharp exothermic peaks with enthalpy changes of ~1200 J·g⁻¹, which could be attributed to the reaction between C₆Na_{0.65} (or C₆Li_{0.65}) and PF₅. Hence, the total amounts of heat generated in these Na- and Li-ion batteries were equal, regardless of the intercalants present. However, the temperatures corresponding to the maximum exothermic peaks differed between the two battery systems (i.e., 184 °C for C₆Na_{0.65} and 264 °C for C₆Li_{0.65}), indicating that Na-ion batteries are less thermally stable. The DSC profile of C₆Li_{0.25}Na_{0.37} revealed that this difference is due to differences in the solid-electrolyte interphase films between C₆Na*ₓ* and C₆Li*_{y}*.

### SUMMARY

Aspects of the invention are set out in the appended claims. The present disclosure is intended to provide a negative electrode sheet, a battery, and an electricity-consumption device, so as to reduce occurrence of thermal runaway of the negative electrode sheet during operation.

According to the invention, there is provided a negative electrode sheet as set out in claim 1. The negative electrode sheet includes a current collector and a negative active material layer disposed on the current collector. The negative active material layer includes a negative active material. When a state of charge (SOC) of a battery with the negative electrode sheet is 100% or a voltage of the battery is 3.65V, a differential scanning calorimeter (DSC) curve of the negative active material layer includes: a first exothermic peak from 120 °C to 150 °C, in which the negative active material layer has heat release *A1* satisfying 2 J/g≤*A1*≤50 J/g; a second exothermic peak from 220 °C to 260 °C, in which the negative active material layer has heat release *A2* satisfying 20 J/g*≤A2≤*100 J/g; and a third exothermic peak from 260 °C to 310 °C, in which the negative active material layer has heat release *A3* satisfying 200 J/g≤ *A3≤*600 J/g.

The heat release corresponding to the first exothermic peak is controlled within the above range, so that a content of a solid electrolyte interface (SEI) generated on the negative active material can be ensured to be within an appropriate range, thereby balancing electrochemical performance of the battery. If the heat release *A1* corresponding to the first exothermic peak is below the above range, it indicates that the negative active material has a relatively low content and poor quality of the SEI, so that the SEI tends to be broken in the later cycles and side reaction is prone to occur between active ions in the negative active material and the electrolyte, which will affect capacity and cycle life of the battery. If the heat release *A1* corresponding to the first exothermic peak is above the above range, it indicates that the negative active material has a relatively high content of the SEI, so that a lot of active ions are consumed in a first cycle. In this case, the capacity of the battery is reduced, and an interface of the negative active material is extremely unstable, so that the thermal runaway is easily aggravated.

The heat release corresponding to the second exothermic peak is controlled within the above range, so that the negative active material can be ensured to have strong thermal stability in the electrolyte, thereby balancing so that the electrochemical performance of the battery and avoiding the thermal runaway. If the heat release *A2* corresponding to the second exothermic peak is below the above range, it indicates that reaction between the negative active material and the electrolyte is relatively weak and dead lithium (inactive alkali metal ion) is too much, so that the battery capacity is poor. If the heat release *A2* corresponding to the second exothermic peak is above the above range, it indicates that the reaction between the negative active material and the electrolyte is relatively strong and overall reactivity of a lithiated negative active material is relatively high, so that the thermal runaway is easily aggravated.

The heat release corresponding to the third exothermic peak is controlled within the above range, so that the negative active material can be ensured to have strong thermal stability with a binder, thereby balancing the electrochemical performance of the battery and avoiding the thermal runaway. If the heat release *A3* corresponding to the third exothermic peak is below t the above range, it indicates that reaction between the binder and lithiated graphite is relatively weak and dead lithium (inactive alkali metal ion) is too much, so that the battery capacity is poor. If the heat *A3* corresponding to the third exothermic peak is above the above range, it indicates that the reaction between the lithiated graphite and the binder is relatively strong and the overall reactivity of the lithiated negative active material is relatively high, so that the thermal runaway is easily aggravated.

The negative active material satisfying the above relationship can significantly improve high-temperature stability of the negative electrode sheet with the negative active material. In this way, an assembled battery can be ensured to maintain relatively low heat release in three different heat release stages under a high-temperature operating environment, so that relatively high heat release due to excessive temperature can be avoided in the three heat release stages, and the thermal runaway can be avoided. For the negative active material satisfying the above relationship, heat release in each temperature range is controlled within a range that the battery can tolerate, so that the battery will not spontaneously combust or explode due to excessive heat, which means that the negative electrode sheet has excellent high-temperature stability.

In an embodiment, peak shapes of the first exothermic peak, the second exothermic peak, and the third exothermic peak include one or any combination of a single characteristic peak shape, a double shoulder peak shape, or a continuous peak shape.

In an embodiment, the heat release *A1* corresponding to the first exothermic peak and the heat release *A3* corresponding to the third exothermic peak satisfy: 0.003≤*A1*/*A3*≤ 0.25. If *A1*/*A3* is less than 0.003, it indicates that the quality of the SEI is poor, and reactivity of the binder and the lithiated graphite is high, so that the battery life will be affected. If *A1*/*A3* is greater than 0.25, it indicates that the SEI is too thick and extremely unstable, and the SEI is prone to be broken to generate a large amount of heat, so that the thermal runaway is more likely to occur.

In an embodiment, the heat release *A2* corresponding to the second exothermic peak and the heat release *A3* corresponding to the third exothermic peak satisfy: 0.03 *≤A2*/*A3* ≤0.5. If *A2*/*A3* is less than 0.03, it indicates that dead lithium in the lithiated graphite is too much, and the reactivity of the binder and the lithiated graphite is high, so that the battery life will be affected. If *A2*/*A3* is greater than 0.5, it indicates that reaction between the lithiated graphite and the electrolyte is strong and a large amount of heat is generated, so that the thermal runaway of the battery is triggered.

In an embodiment, a particle diameter *Dv*50 of the negative active material satisfies 10 µ≤*Dv*50≤17 µm, where the *Dv*50 refers to a particle diameter when a cumulative volume fraction reaches 50% in measuring a volume-based distribution using a laser scattering method. By further limiting a particle diameter of the negative active material, heat generated by reaction between the negative active material and the electrolyte 400 can be further reduced by controlling the particle diameter while controlling the heat release, so that the negative active material can be ensured to have relatively high thermal stability. If the particle diameter of the negative active material is below the above range, it indicates that the negative active material 11 in the negative active material layer has a relatively small particle diameter, which not only easily causes a lot of side reactions but also increases preparation difficulty of the negative active material. In this case, the negative active material is easily agglomerated and difficultly subdivided. When the particle diameter of the negative active material is above the above range, the particle is too large, so that storage sites of alkali metal ions decrease and capacity of the battery is relatively poor.

In an embodiment, the specific surface area of the negative active material satisfies 1.1 m²/g to 4.5 m²/g. Since the specific surface area will affect initial coulombic efficiency (ICE) of the negative active material and deintercalation of the active ions (lithium-ions or sodium-ions), a larger specific surface area causes lower ICE, a smaller specific surface area is not conducive to the deintercalation of the active ions, and the specific surface area of the negative active material maintained within the above range can ensure that the negative active material can have excellent electrochemical performance.

In an embodiment, a gram capacity of the negative active material ranges from 330 mAh/g to 360 mAh/g.

The negative active material is one or more of a graphite particle, a soft carbon particle, or a hard carbon particle. The graphite particle may be natural graphite or artificial graphite, which is not limited in the present disclosure. A shape of the graphite particle is not limited and may be spherical, plate-shaped, etc. A graphite material is the most widely used negative active material. The graphite material has good conductivity, which can not only improve conductivity of a silicon material but also increase capacity.

In a second aspect, there is provided a battery as set out in claim 8. The battery includes electrolyte, a positive electrode sheet, a separator, and the negative electrode sheet of the first aspect. The positive electrode sheet is at least partially immersed in the electrolyte. The separator is located at one side of the positive electrode sheet and is at least partially immersed in the electrolyte. The negative electrode sheet is disposed at one side of the separator away from the positive electrode sheet and at least partially immersed in the electrolyte. It can be understood that the battery has all technical effects of the negative electrode sheet of the first aspect, which is not repeated herein. The negative electrode sheet includes a current collector and a negative active material layer disposed on the current collector. The negative active material layer includes a negative active material. When a state of charge (SOC) of a battery with the negative electrode sheet is 100% or a voltage of the battery is 3.65V, a differential scanning calorimeter (DSC) curve of the negative active material layer includes: a first exothermic peak from 120 °C to 150 °C, in which the negative active material layer has heat release *A1* satisfying 2 J/g*≤A1≤*50 J/g; a second exothermic peak from 220 °C to 260 °C, in which the negative active material layer has heat release *A2* satisfying 20 J/g*≤A2≤*100 J/g; and a third exothermic peak from 260 °C to 310 °C, in which the negative active material layer has heat release *A3* satisfying 200 J/g≤*A3≤*600 J/g*.*

In a third aspect, there is provided an electricity-consumption device as set out in claim 9. The electricity-consumption device includes a battery. The battery includes electrolyte, a positive electrode sheet, a separator, and the negative electrode sheet of the first aspect. The positive electrode sheet is at least partially immersed in the electrolyte. The separator is located at one side of the positive electrode sheet and is at least partially immersed in the electrolyte. The negative electrode sheet is disposed at one side of the separator away from the positive electrode sheet and at least partially immersed in the electrolyte. It can be understood that the battery has all technical effects of the negative electrode sheet of the first aspect, which is not repeated herein. The negative electrode sheet includes a current collector and a negative active material layer disposed on the current collector. The negative active material layer includes a negative active material. When a state of charge (SOC) of a battery with the negative electrode sheet is 100% or a voltage of the battery is 3.65V, a differential scanning calorimeter (DSC) curve of the negative active material layer includes: a first exothermic peak from 120 °C to 150 °C, in which the negative active material layer has heat release *A1* satisfying 2 J/g≤*A1≤*50 J/g; a second exothermic peak from 220 °C to 260 °C, in which the negative active material layer has heat release *A2* satisfying 20 J/g*≤A2≤*100 J/g; and a third exothermic peak from 260 °C to 310 °C, in which the negative active material layer has heat release *A3* satisfying 200 J/g≤*A3≤*600 J/g.

### BRIEF DESCRIPTION OF THE DRAWINGS

In order to describe technical solutions in embodiments of the present disclosure or the related art more clearly, the following will give a brief introduction to the accompanying drawings required for describing embodiments or the related art. Apparently, the accompanying drawings hereinafter described are merely some embodiments of the present disclosure. Based on these drawings, those of ordinary skill in the art can also obtain other drawings without creative effort.
FIG. 1 is a schematic cross-sectional view of a negative electrode sheet according to an embodiment.
FIG. 2 is a schematic view of a battery according to an embodiment.
FIG. 3 is a schematic view of an electricity-consumption device according to an embodiment.
FIG. 4 is an overcharge curve of a secondary battery of graphite according to embodiment 1.
FIG. 5 is an overcharge curve of a secondary battery of graphite according to comparative embodiment 2.

### DETAILED DESCRIPTION

The following will clearly and completely describe technical solutions for embodiments of the present disclosure with reference to accompanying drawings. Apparently, embodiments described herein are merely some of, rather than all the embodiments of the present disclosure. Based on the embodiments of the present disclosure, all other embodiments obtained by those of ordinary skill in the art without creative effort shall fall in the scope of protection of the present disclosure.

It may be noted that when a component is "fixed" to another component, the component may be fixed to the other component directly or via an intermediate component. When a component is "connected" to another component, the component may be connected to the other component directly or via an intermediate component.

Unless otherwise defined, all technical and scientific terms used herein have the same meaning as commonly understood by those skilled in the art of the present disclosure. The terms used herein in the present disclosure are for the purpose of describing embodiments only and are not intended to limit the present disclosure. The term "and/or" used herein includes any and all combinations of one or more of associated listed items.

In related researches, there have been many researches on thermal management of a positive electrode of the battery. However, currently, in terms of a carbon material negative electrode (especially, a graphite negative electrode), researches on exothermic characteristics and exothermic indexes of the battery remains unclear. Therefore, how to provide a safe negative active material that can reduce occurrence of the thermal runaway becomes a critical issue.

The present disclosure is intended to provide a negative electrode sheet 100, a battery 1000, and an electricity-consumption device 2000, so as to reduce occurrence of thermal runaway of the negative electrode sheet 100 during operation.

In order to achieve the purpose of the present disclosure, the present disclosure provides the following technical solutions.

Some embodiments of the present disclosure will be described in detail below with reference to the accompanying drawings. The following embodiments and characteristics in the embodiments may be combined with each other without conflict.

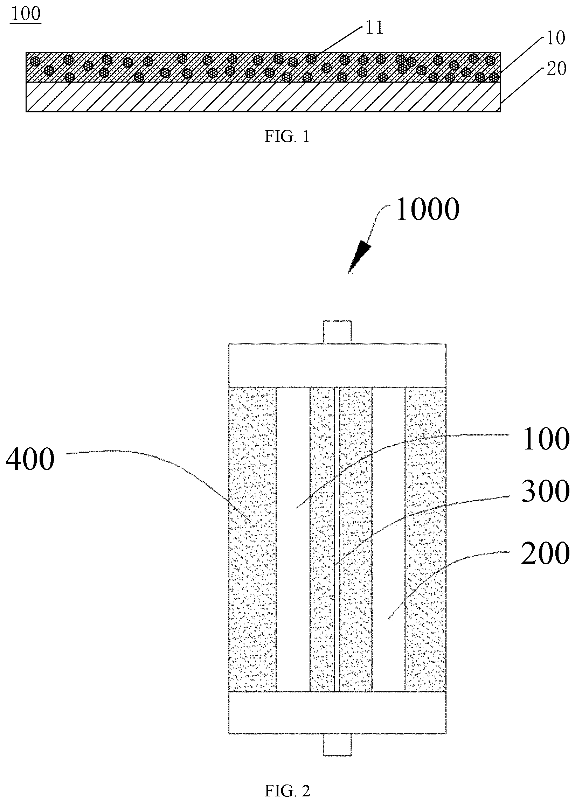

A negative electrode sheet 100 is provided in the present disclosure. As illustrated in FIG. 1, the negative electrode sheet 100 includes a current collector 20 and a negative active material layer 10 disposed on the current collector 20. The negative active material layer 10 includes a negative active material 11. The negative active material layer 10 has a preset exothermic characteristic under preset conditions. The negative active material layer 10 with the preset exothermic characteristic can greatly improve high-temperature stability of the negative electrode sheet 100.

Specifically, when a state of charge (SOC) of a battery with the negative electrode sheet 100 is 100% or a voltage of the battery is 3.65V, a differential scanning calorimeter (DSC) curve of the negative active material layer includes a first exothermic peak, a second exothermic peak, and a third exothermic peak. The DSC curve of the negative active material layer in an immersed electrolyte is a heat release curve of the negative active material layer obtained by a DSC through measurement.

In an embodiment, the preset conditions include but are not limited to a particle diameter and/or a specific surface area of the negative active material.

The negative active material layer further includes a binder. The negative active material layer may further include a conductive agent. The negative active material, the conductive agent, and the binder are added to a solvent and mixed to prepare a negative electrode slurry, and then the negative electrode slurry is coated on the negative electrode current collector 20 to prepare the negative electrode sheet 100.

In an embodiment, the negative electrode current collector may be one or more of a copper foil, a porous copper foil, a foamed nickel/copper foil, a galvanized copper foil, a nickel-plated copper foil, a coated-carbon copper foil, a nickel foil, a titanium foil, and a carbonaceous porous copper foil. In an embodiment, the negative electrode current collector may be one or more of the copper foil, the galvanized copper foil, the nickel-plated copper foil, and the carbon-coated copper foil.

The binder is acrylonitrile, vinylidene fluoride, vinyl alcohol, carboxymethyl cellulose, lithium carboxymethyl cellulose, sodium carboxymethyl cellulose, methacryloyl, acrylic acid, lithium acrylate, acrylamide, amide, imide, acrylate, styrene-butadiene rubber, sodium alginate, chitosan, ethanediol, guar gum monomer, polymer, or copolymer.

In an embodiment, the conductive agent may be at least one of conductive carbon black, acetylene black, graphite, graphene, carbon micro-nano linear conductive material, or carbon micro-nano tubular conductive material.

A specific DSC method for testing the negative active material layer is as follows. A fully-charged battery is disassembled in a glove box, to obtain a negative electrode sheet. The negative electrode sheet is cut into 2 cm*2 cm sample electrode sheets to be tested, and the sample electrode sheets to be tested are rinsed with dimethyl carbonate (DMC) for 3 minutes and dried at room temperature in the glove box for 8 hours, to obtain a negative active material on the dried sample electrode sheets to be tested. 3 mg of the negative active material is put into a crucible of a DSC, 2 mg of electrolyte is added to the crucible, and then the crucible is sealed and waited for testing. A condition for the DSC test is set to increase the temperature from 30 °C to 450 °C at a heating rate of 5 °C/min. The test is completed and a test result is obtained.

The crucible is gold-plated.

The electrolyte is formed by mixing ethylene carbonate (EC) and ethyl methyl carbonate (EMC) at a volume ratio of 3:7 and adding lithium hexafluorophosphate (LiPF₆) to the mixture, where the LiPF₆ has a concentration of 1 mol/L.

The DSC can measure a heat-flow-power difference between a sample and a reference with changes in temperature or time under control of a certain temperature program (ascending/descending/constant temperature) and under a certain atmosphere. Based on this, information related to thermal effects such as heat absorption, heat release, and specific heat changes of the sample under the control of the temperature program can be obtained, and the heat absorption/release (enthalpy) and characteristic temperature (a starting point, a peak value, and an ending point) of the thermal effects can be calculated.

Further, the first exothermic peak appears from 120 °C to 150 °C, the second exothermic peak appears from 220 °C to 260 °C, and the third exothermic peak appears from 260 °C to 310 °C. For example, an apex of the first exothermic peak may be in the temperature range from 120 °C to 150 °C, and an apex of an exothermic peak refers to a maximum point of the exothermic peak in a corresponding temperature range.

The first exothermic peak actually corresponds to an exothermic peak of reaction of an outer SEI. It can be understood that the SEI is formed during a first charging and discharging process of the battery, and the SEI is a passivation film formed on the surface of the negative active material by active ions (lithium-ions or sodium-ions) and the solvent (EC/DMC). Therefore, the first exothermic peak is actually heat release before the SEI is broken. In the present disclosure, heat release corresponding to the SEI can be obtained by integrating the exothermic peak within the range from 120 °C to 150 °C in a DSC test spectrum, where a unit of the heat release is Joule (J).

The second exothermic peak corresponds to an exothermic peak of reaction between the negative active material and the electrolyte. It can be understood that in the present disclosure, a negative active material in a fully-charged state is provided for the DSC test, and the negative active material is in direct contact with the electrolyte after the SEI is broken, so that the reaction between the negative active material and the electrolyte is intensified, and a large amount of heat is released.

The third exothermic peak corresponds to an exothermic peak of reaction between the negative active material and the binder. It can be understood that after the reaction between the negative active material and the electrolyte is completed, the electrolyte is consumed, so that the negative active material further reacts with the binder attached to the surface of the negative active material, thereby releasing heat.

In an embodiment, the first exothermic peak appears from 120 °C to 150 °C, in which the negative active material layer has heat release *A1* satisfying 2 J/g≤*A1*≤50 J/g. In an embodiment, the heat release *A1* may be, but is not limited to, 2 J/g, 10 J/g, 15 J/g, 20 J/g, 25 J/g, 30 J/g, 35 J/g, 40 J/g, 45 J/g, or 50 J/ g.

It can be seen from the embodiment above that the heat release *A1* corresponding to the first exothermic peak actually reflects the heat release generated before the SEI is broken. At the same time, the heat release generated before the SEI is broken is proportional to a content of the SEI. In other words, a thicker SEI causes a higher exothermic peak in the DSC curve, or a higher heat release obtained represents a higher content of the SEI in a negative active material to be tested.

Therefore, the heat release corresponding to the first exothermic peak is controlled within the above range, so that the content of the SEI generated on the negative active material can be ensured to be within an appropriate range, thereby balancing electrochemical performance of the battery. If the heat release *A1* corresponding to the first exothermic peak is below the above range, it indicates that the negative active material has a relatively low content of the SEI, so that side reaction is prone to occur between the active ions in the negative active material and the electrolyte and dead lithium (inactive alkali metal ion) in the negative active material is too much, which will affect capacity and cycle life of the battery. If the heat release *A1* corresponding to the first exothermic peak is above the above range, it indicates that the negative active material has a relatively high content of the SEI, so that a large amount of active ions is consumed in a first cycle. In this case, the capacity of the battery is reduced, and an interface of the negative active material is extremely unstable, so that thermal runaway is easily aggravated.

In an embodiment, the second exothermic peak appears from 220 °C to 260 °C, in which the negative active material layer has heat release *A2* satisfying 20 J/g*≤A2≤*100 J/g. In an embodiment, the heat release *A2* may be, but is not limited to, 20 J/g, 30 J/g, 40 J/g, 50 J/g, 60 J/g, 70 J/g, 80 J/g, 90 J/g, or 100 J/g.

It can be seen from the embodiment above that the heat release *A2* corresponding to the second exothermic peak actually reflects the heat release generated during the reaction between the negative active material and the electrolyte. The heat release A2 can reflect intensity of the reaction between the negative active material and the electrolyte. In other words, stronger reaction between the negative active material and the electrolyte causes a higher exothermic peak in the DSC curve, or higher heat release obtained represents poorer thermal stability of the negative active material.

Therefore, the heat release corresponding to the second exothermic peak is controlled within the above range, so that the negative active material can be ensured to have strong thermal stability in the electrolyte, thereby balancing the electrochemical performance of the battery and avoiding the thermal runaway. If the heat release *A2* corresponding to the second exothermic peak is below the above range, it indicates that the reaction between the negative active material and the electrolyte is relatively weak and dead lithium (inactive alkali metal ion) is too much, so that the battery capacity is poor. If the heat release *A2* corresponding to the second exothermic peak is above the above range, it indicates that the reaction between the negative active material and the electrolyte is relatively strong and overall reactivity of a lithiated negative active material is relatively high, so that the thermal runaway is easily aggravated.

In an embodiment, the third exothermic peak appears from 260 °C to 310 °C, in which the negative active material layer has heat release *A3* satisfying 200 J/g≤*A3≤*600 *J*/*g.* In an embodiment, the heat release *A3* may be, but is not limited to, 200 J/g, 250 J/g, 300 J/g, 350 J/g, 400 J/g, 450 J/g, 500 J/g, 550 J/g, or 600 J/g.

It can be seen from the embodiment above that the heat release *A3* corresponding to the third exothermic peak actually reflects the heat release generated during the reaction between the negative active material and the binder. The heat release *A3* can reflect intensity of the reaction between the negative active material and the binder. In other words, stronger reaction between the negative active material and the binder causes a higher exothermic peak in the DSC curve, or higher heat release obtained represents poorer thermal stability of the negative active material.

Therefore, the heat release corresponding to the third exothermic peak is controlled within the above range, so that the negative active material can be ensured to have strong thermal stability with the binder, thereby balancing the electrochemical performance of the battery and avoiding the thermal runaway. If the heat release *A3* corresponding to the third exothermic peak is below the above range, it indicates that the reaction between the negative active material and the binder is relatively weak and dead lithium (inactive alkali metal ion) is too much, so that the battery capacity is poor. If the heat release *A3* corresponding to the third exothermic peak is above the above range, it indicates that the reaction between the negative active material and the binder is relatively strong and the overall reactivity of the lithiated negative active material is relatively high, so that the thermal runaway is easily aggravated.

The negative active material satisfying the above relationship can significantly improve high-temperature stability of the negative electrode sheet with the negative active material. In this way, an assembled battery can be ensured to maintain relatively low heat release in three different heat release stages under a high-temperature operating environment, so that relatively high heat release due to excessive temperature can be avoided in the three heat release stages, and the thermal runaway can be avoided. For the negative active material satisfying the above relationship, heat release in each temperature range is controlled within a range that the battery can tolerate, so that the battery will not spontaneously combust or explode due to excessive heat, which means that the negative electrode sheet has excellent high-temperature stability.

In an embodiment, peak shapes of the first exothermic peak, the second exothermic peak, and the third exothermic peak include one or any combination of a single characteristic peak shape, a double shoulder peak shape, or a continuous peak shape.

In an embodiment, the heat release *A1* corresponding to the first exothermic peak and the heat release *A3* corresponding to the third exothermic peak satisfy: 0.003 *≤A1*/*A3*≤ 0.25. In an embodiment, *A1*/*A3* may be, but are not limited to, 0.003, 0.01, 0.02, 0.05, 0.07, 0.1, 0.12, 0.14, 0.18, 0.2, 0.23, or 0.25.

If *A1*/*A3* is less than 0.003, it indicates that the active ions are not active enough and the battery life will be affected. If *A1*/*A3* is greater than 0.25, it indicates that the SEI is too thick and extremely unstable, and the SEI is prone to be broken to generate a large amount of heat, so that the thermal runaway is more likely to occur.

In an embodiment, the heat release *A2* corresponding to the second exothermic peak and the heat release *A3* corresponding to the third exothermic peak satisfy: 0.03 *≤A2*/*A3* ≤0.5. In an embodiment, *A2*/*A3* may be, but is not limited to, 0.03, 0.04, 0.05, 0.06, 0.08, 0.1, 0.15, 0.2, 0.25, 0.3, 0.35, 0.4, or 0.5.

If *A2*/*A3* is less than 0.03, it indicates that the active ions are not active enough and the battery life will be affected. If *A2*/*A3* is greater than 0.5, it indicates that the reaction between the negative active material and the electrolyte is strong and a large amount of heat is generated, so that the thermal runaway is triggered.

In an embodiment, a particle diameter *Dv*50 of the negative active material satisfies 10 µm≤*Dv*50≤17 µm, where the *Dv*50 refers to a particle diameter when a cumulative volume fraction reaches 50% in measuring a volume-based distribution using a laser scattering method.

The *Dv*50 may be measured as follows. According to a GB/T19077-2016 standard, a graphite particle is sampled and measured by a laser-diffraction particle size distribution analyzer (Malvern Mastersizer 3000).

In an embodiment, the particle diameter *Dv*50 of the negative active material may be, but is not limited to, 10 µm, 11 µm, 12 µm, 13 µm, 14 µm, 15 µm, 16 µm, or 17 µm.

Further, in addition to controlling the heat release corresponding to the negative active material, the particle diameter of the negative active material further needs to be controlled, so that the negative active material is not too large or too small. Since an excessively small negative active material has a relatively large specific surface area, the reactivity between the electrolyte and the negative active material increases, so that side reaction between the negative active material layer and the electrolyte is aggravated and heat accumulation is caused, thereby leading to thermal runaway.

By further limiting a particle diameter of the negative active material, heat generated by reaction between the negative active material and the electrolyte can be further reduced by controlling the particle diameter while controlling the heat release, so that the negative active material can be ensured to have relatively high thermal stability.

If the particle diameter of the negative active material is below the above range, it indicates that the negative active material in the negative active material layer has a relatively small particle diameter, which not only easily causes a lot of side reactions but also increases preparation difficulty of the negative active material. In this case, the negative active material is easily agglomerated and difficultly subdivided. When the particle diameter of the negative active material is above the above range, the particle is too large, so that storage sites of alkali metal ions decrease and capacity of the battery is relatively poor.

In an embodiment, the specific surface area of the negative active material satisfies 1.1 m²/g to 4.5 m²/g. Specifically, the specific surface area of the negative active material may be, but is not limited to, 1.1 m²/g, 1.15 m²/g, 1.2 m²/g, 1.25 m²/g, 1.3 m²/g, 1.35 m²/g, 1.4 m²/g, or 4.5 m²/g.

Since the specific surface area will affect initial coulombic efficiency (ICE) of the negative active material and deintercalation of the active ions, a larger specific surface area causes lower ICE, smaller specific surface area is not conducive to the deintercalation of the active ions, and the specific surface area of the negative active material maintained within the above range can ensure that the negative active material can have excellent electrochemical performance.

In an embodiment, a gram capacity of the negative active material ranges from 330 mAh/g to 360 mAh/g. Specifically, the gram capacity of the negative active material may be, but is not limited to, 330 mAh/g, 340 mAh/g, 341 mAh/g, 342 mAh/g, 343 mAh/g, 344 mAh/g, 345 mAh/g, 346 mAh/g, 347 mAh/g, 348 mAh/g, 349 mAh/g, 350 mAh/g, or 360 mAh/g.

In an embodiment, the negative active material is one or more of a graphite particle, a soft carbon particle, or a hard carbon particle.

The graphite particle may be natural graphite or artificial graphite, which is not limited in the present disclosure. A shape of the graphite particle is not limited and may be spherical, plate-shaped, etc. A graphite material is the most widely used negative active material. The graphite material has good conductivity, which can not only improve conductivity of a silicon material but also increase capacity.

In an embodiment, the negative active material may be one or more of negative active materials that are subject to: surface treatments such as spheroidization or structural modification, oxidation, etching, etc.; or doping with nitrogen, phosphorus, sulfur, iron, cobalt, nickel, aluminum, zinc, or the like; or modification treatments such as being coated with an amorphous carbon layer, etc.

In an embodiment, a battery 1000 is further provided in the present disclosure. As illustrated in FIG. 2, the battery 1000 includes electrolyte 400, a positive electrode sheet 200, a separator 300, and the negative electrode sheet 100 of the first aspect. The positive electrode sheet 200 is at least partially immersed in the electrolyte 400. The separator 300 is located at one side of the positive electrode sheet 200 and is at least partially immersed in the electrolyte 400. The negative electrode sheet 100 is disposed at one side of the separator 300 away from the positive electrode sheet 200 and at least partially immersed in the electrolyte 400. Since the battery 1000 provided in the present disclosure adopts the negative electrode sheet 100 provided in the present disclosure, the battery 1000 has good high-temperature stability and safety, thereby facilitating application of the battery in various fields.

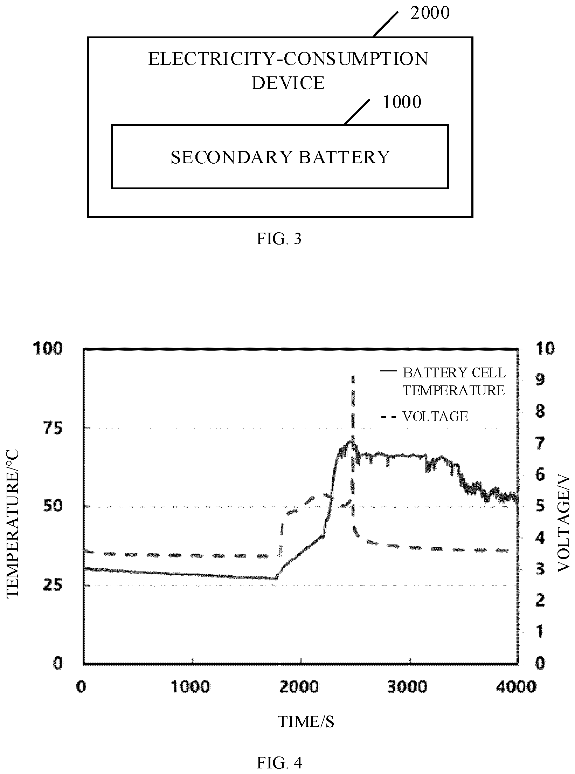

In an embodiment, as illustrated in FIG. 3, an electricity-consumption device 2000 is further provided in the present disclosure. The electricity-consumption device 2000 includes the battery 1000 described above. The electricity-consumption device 2000 adopting the battery 1000 can have high-temperature stability.

Technical solutions of the present disclosure will be further described below with reference to embodiments and accompanying drawings.

### Embodiment 1

Preparation of a graphite particle is as follows. A coke raw material is crushed, graphitized, screened and demagnetized, etc., and then artificial graphite is obtained. The artificial graphite has a particle diameter distribution of *Dv*50=16.5 µm, a specific surface area of 1.21 m²/g, and heat release *A1* of 2.2 J/g, *A1*/*A3*=0.005, and *A2*/*A3*=0.05. A negative active material layer is prepared with the graphite particle.

### Embodiment 2

Preparation of a graphite particle is as follows. A coke raw material is crushed, graphitized, screened and demagnetized, etc., and then artificial graphite is obtained. The artificial graphite has a particle diameter distribution of *Dv50=15.8* µm, a specific surface area of 1.34 m²/g, and heat release *A1* of 2.8 J/g, *A1*/*A3*=0.006, and *A2*/*A3*=0.06. A negative active material layer is prepared with the graphite particle.

### Embodiment 3

Preparation of a graphite particle is as follows. A coke raw material is crushed, graphitized, screened and demagnetized, etc., and then artificial graphite is obtained. The artificial graphite has a particle diameter distribution of *Dv*50=14.9 µm, a specific surface area of 1.38 m²/g, and heat release *A1* of 3.2 J/g, *A1*/*A3*=0.006, and *A2*/*A3*=0.09. A negative active material layer is prepared with the graphite particle.

### Embodiment 4

Preparation of a graphite particle is as follows. A coke raw material is crushed, graphitized, screened and demagnetized, etc., and then artificial graphite is obtained. The artificial graphite has a particle diameter distribution of *Dv*50=13.2 µm, a specific surface area of 1.54 m²/g, and heat release *A1* of 4.1 *J*/*g, A1*/*A3*=0.008, and *A2*/*A3*=0.15. A negative active material layer is prepared with the graphite particle.

### Embodiment 5

Preparation of a graphite particle is as follows. A coke raw material is crushed, graphitized, screened and demagnetized, etc., and then artificial graphite is obtained. The artificial graphite has a particle diameter distribution of *Dv*50=12.5 µm, a specific surface area of 1.63 m²/g, and heat release *A1* of 4.5 *J*/*g, A1*/*A3*=0.009, and *A2*/*A3*=0.19. A negative active material layer is prepared with the graphite particle.

### Comparative embodiment 1

Preparation of a graphite particle is as follows. A coke raw material is crushed, graphitized, screened and demagnetized, etc., and then artificial graphite is obtained. The artificial graphite has a particle diameter distribution of *Dv50=11.2* µm, a specific surface area of 1.65 m²/g, and heat release *A1* of 5.2 *J*/*g, A1*/*A3*=0.0029, and *A2*/*A3*=0.52. A negative active material layer is prepared with the graphite particle.

### Comparative embodiment 2

Preparation of a graphite particle is as follows. A coke raw material is crushed, graphitized, screened and demagnetized, etc., and then artificial graphite is obtained. The artificial graphite has a particle diameter distribution of *Dv*50=10.2 µm, a specific surface area of 1.97 m²/g, and heat release *A1*of 6.31 *J*/*g, A1*/*A3=0.0025,* and *A2*/*A3*=0.54. A negative active material layer is prepared with the graphite particle.

### Comparative embodiment 3

Preparation of a graphite particle is as follows. A coke raw material is crushed, graphitized, screened and demagnetized, etc., and then artificial graphite is obtained. The artificial graphite has a particle diameter distribution of *Dv*50=17.2 µm, a specific surface area of 1.24 m²/g, and heat release *A1* of 1.31 J/g, *A1*/*A3*=0.002, and *A2*/*A3*=0.025. A negative active material layer is prepared with the graphite particle.

The negative active material provided in each of embodiments 1 to 5 and the negative active material provided in one of the comparative embodiments 1 to 3 may be assembled into a negative electrode sheet and a lithium-ion secondary battery in the following methods.

Positive electrode: a positive electrode material is mixed and ball-milled with polyvinylidene fluoride and Super-P (i.e., conductive carbon black) at a mass ratio of 93:3:4 to obtain a positive electrode slurry. The positive electrode slurry is coated on a surface of an aluminum foil, is vacuum dried at 110 °C overnight, and is rolled to obtain a positive electrode sheet.

Negative electrode: a negative active material is configured with conductive carbon black, carboxymethyl cellulose (CMC), and styrene-butadiene rubber (SBR) at a mass ratio of 95%:2%:1.2%:1.8% to obtain a negative electrode slurry. The negative electrode slurry is evenly coated on an aluminum foil to obtain a negative electrode sheet.

Electrolyte: EC is mixed with EMC at a volume ratio of 3:7, and LiPF₆ is added thereto, so as to form the electrolyte. LiPF₆ has a concentration of 1 mol/L.

Separator: a polypropylene microporous separator.

Assembling of a lithium-ion secondary battery: a lithium-ion full battery is assembled in an inert-atmosphere glove box in an order of the negative electrode sheet-the separator-the electrolyte-the positive electrode sheet.

Conditions for cycle tests: the above battery obtained is subject to charging and discharging cycle tests on a charging and discharging instrument. Test temperature is 25 °C, cycle rate is 1C (i.e., both a charging rate and a discharging rate are 1C), a charging voltage ranges from 2.5V to 3.65V, and capacity retention rate after cycles is calculated. A formula for calculating the capacity retention rate of the cycles is: capacity retention rate after nth cycles = (discharging capacity after the nth cycles/maximum discharging capacity of the cycles) * 100%.

It can be understood that a term "cycle" in the present disclosure refers to the number of times the battery is charged at preset rate and discharged at the preset rate. One cycle refers to completion of one charging and discharging process by the battery. Capacity retention rate after 500 cycles refers to the capacity retention rate of the battery after 500 cycles of the charging and discharging process at a test temperature of 25 °C, a charging rate of 1C, and a discharging rate of 1C.

The electrochemical performance of each lithium-ion secondary battery assembled in the above lithium-ion secondary battery embodiments is tested in terms of performances as shown in Table 1, and test results are as shown in Table 1 below.

**Table 1**

| | *Dv*50 particle diameter (µm) | Specific surface area (m²/g) | Gram capacity (mAh/g) | *A1*/*A3* | *A1*/*A2* | Retention rate after 500 cycles (%) | Whether overcharge is passed |
|---|---|---|---|---|---|---|---|
| Embodiment 1 | 16.5 | 1.21 | 348 | 0.005 | 0.05 | 95.2 | YES |
| Embodiment 2 | 15.8 | 1.34 | 346 | 0.006 | 0.06 | 94.3 | YES |
| Embodiment 3 | 14.9 | 1.38 | 345 | 0.006 | 0.09 | 92.7 | YES |
| Embodiment 4 | 13.2 | 1.54 | 344 | 0.008 | 0.15 | 91.8 | YES |
| Embodiment 5 | 12.5 | 1.63 | 344 | 0.009 | 0.19 | 91.2 | YES |
| Comparative embodiment 1 | 11.2 | 1.65 | 343 | 0.0029 | 0.52 | 90.2 | NO |
| Comparative embodiment 2 | 10.2 | 1.97 | 342 | 0.0025 | 0.54 | 86.3 | NO |
| Comparative embodiment 3 | 17.2 | 1.24 | 343 | 0.002 | 0.025 | 85.2 | NO |

As can be seen from the embodiments 1 to 5, a battery assembled with the negative active material with the heat release provided in the present disclosure still can have relatively high cycle retention rate after multiple cycles. When the negative active material is used in a long-term high-temperature environment, the heat release corresponding to the negative active material in the three heat release stages is within the ranges provided in the present disclosure, and the heat release has a relatively small impact on the overall electrical performance of the battery. Therefore, the retention rate after 500 cycles of the battery can reach more than 90%.

As can be seen from the comparative embodiments 1 to 3, when any heat release of the carbon material in the three heat release stages does not satisfy the range provided in the present disclosure (any range of *A1, A2,* and *A3*), the ratio of *A1*/*A3* or *A2*/*A3* will become unbalanced. Therefore, the retention rate after 500 cycles of the battery is less than that of the embodiments 1 to 5. Moreover, while the heat release of the material tested in the comparative embodiment 3 is low, the material will lead to severe lithium precipitation during an overcharge process due to poor dynamics performance of the material, thereby triggering the thermal runaway.

Further, FIG. 4 illustrates an overcharge curve of a secondary battery of graphite embodiment 1. In a case where an overcharge voltage reaches 5.475V, the battery stops being charged and keeps still. In this case, a voltage of the battery cell can still maintain an initial voltage, and temperature of the battery cell is relatively low (about 53 °C), which indicates that the secondary battery provided in the embodiment 1 passes an overcharge test.

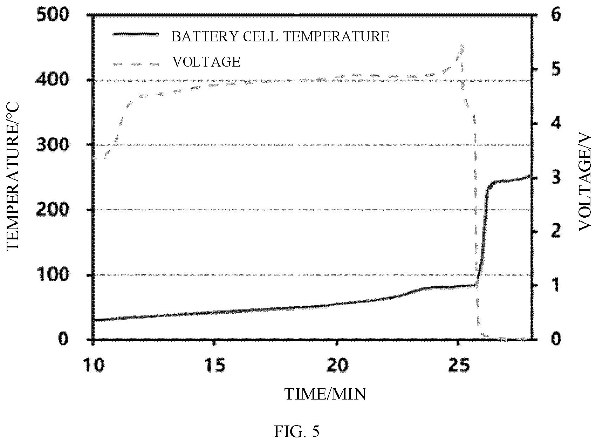

FIG. 5 illustrates an overcharge curve of a secondary battery of graphite comparative embodiment 2. In a case where an overcharge voltage reaches 5.475V, the battery stops being charged and keeps still. In this case, a voltage of the battery cell drops to 0V, temperature of the battery cell increases to 253 °C, so that the thermal runaway is triggered, which indicates that the secondary battery provided in the comparative embodiment 2 fails an overcharge test.

In description of the present disclosure, it may be understood that locations or positional relationships indicated by terms such as "center", "on", "under", "left", "right", "vertical", "horizontal", "in", "out", and the like are locations or positional relationship based on accompanying drawings and are only for the convenience of description and simplicity, rather than explicitly or implicitly indicate that apparatuses or components referred to herein must have a certain direction or be configured or operated in a certain direction and therefore cannot be understood as limitations to the present disclosure.

## Claims

1. A negative electrode sheet (100), comprising a current collector (20) and a negative active material layer (10) disposed on the current collector (20), wherein the negative active material layer (10) comprises a negative active material (11) and a binder, wherein the negative active material (11) is one or more of a graphite particle, a soft carbon particle, or a hard carbon particle, and wherein the binder is acrylonitrile, vinylidene fluoride, vinyl alcohol, carboxymethyl cellulose, lithium carboxymethyl cellulose, sodium carboxymethyl cellulose, methacryloyl, acrylic acid, lithium acrylate, acrylamide, amide, imide, acrylate, styrene-butadiene rubber, sodium alginate, chitosan, ethanediol, guar gum monomer, polymer, or copolymer,
wherein, when a state of charge (SOC) of a battery with the negative electrode sheet (100) is 100% or a voltage of the battery is 3.65V, a differential scanning calorimeter (DSC) curve of the negative active material layer (10) comprises:
a first exothermic peak from 120 °C to 150 °C, in which the negative active material layer (10) has heat release *A1* satisfying 2 J/g≤*A1*≤50 J/g;
a second exothermic peak from 220 °C to 260 °C, in which the negative active material layer (10) has heat release A2 satisfying 20 J/g*≤A2≤* 100 J/g; and
a third exothermic peak from 260 °C to 310 °C, in which the negative active material layer (10) has heat release *A3* satisfying 200 J/g≤*A3≤*600 J/g,
wherein the DSC curve of the negative active material layer (10) is obtained by a DSC through measurement, and the measurement is performed by adding the negative active material layer (10) and electrolyte into a gold-plated crucible at a mass ratio of 0.78:1 and heating the gold-plated crucible from 30 °C to 450 °C at a heating rate of 5 °C/min, and
wherein the electrolyte is formed by mixing ethylene carbonate and ethyl methyl carbonate at a volume ratio of 3:7 and adding lithium hexafluorophosphate to a mixture of the ethylene carbonate and the ethyl methyl carbonate, the lithium hexafluorophosphate having a concentration of 1 mol/L.

2. The negative electrode sheet (100) of claim 1, wherein peak shapes of the first exothermic peak, the second exothermic peak, and the third exothermic peak comprise one or any combination of a single characteristic peak shape, a double shoulder peak shape, or a continuous peak shape.

3. The negative electrode sheet (100) of claim 1, wherein the heat release *A1* corresponding to the first exothermic peak and the heat release *A3* corresponding to the third exothermic peak satisfy: 0.003≤*A1*/*A3*≤0.25.

4. The negative electrode sheet (100) of claim 1, wherein the heat release *A2* corresponding to the second exothermic peak and the heat release *A3* corresponding to the third exothermic peak satisfy: 0.03≤*A2*/*A3*≤0.5.

5. The negative electrode sheet (100) of claim 1, wherein a particle diameter *Dv*50 of the negative active material (11) satisfies 10 µm≤*Dv*50≤17 µm, wherein the *Dv*50 refers to a particle diameter when a cumulative volume fraction reaches 50% in measuring a volume-based distribution using a laser scattering method.

6. The negative electrode sheet (100) of claim 1, wherein the specific surface area of the negative active material (11) satisfies 1.1 m²/g to 4.5 m²/g.

7. The negative electrode sheet (100) of claim 1, wherein a gram capacity of the negative active material (11) ranges from 330 mAh/g to 360 mAh/g.

8. A battery (1000), comprising:
electrolyte (400);
a positive electrode sheet (2000) at least partially immersed in the electrolyte;
a separator (300) located at one side of the positive electrode sheet and at least partially immersed in the electrolyte; and
the negative electrode sheet (100) of any of claims 1 to 7, wherein the negative electrode sheet (100) is disposed at one side of the separator (300) away from the positive electrode sheet (2000) and at least partially immersed in the electrolyte (400).

9. An electricity-consumption device (2000), comprising the battery of claim 8.

## Patentansprüche

1. Negative Elektrodenfolie (100), umfassend einen Stromkollektor (20) und eine negative Aktivmaterialschicht (10), die auf dem Stromkollektor (20) angeordnet ist, wobei die negative Aktivmaterialschicht (10) ein negatives Aktivmaterial (11) und ein Bindemittel umfasst, wobei das negative Aktivmaterial (11) ein oder mehrere Graphitpartikel, ein weiches Kohlenstoffpartikel oder ein hartes Kohlenstoffpartikel ist, wobei das Bindemittel Acrylnitril, Vinylidenfluorid, Vinylalkohol, Carboxymethylcellulose, Lithiumcarboxymethylcellulose, Natriumcarboxymethylcellulose, Methacryloyl, Acrylsäure, Lithiumacrylat, Acrylamid, Amid, Imid, Acrylat, Styrol-Butadien-Kautschuk, Natriumalginat, Chitosan, Ethandiol, Guarkernmehlmonomer, Polymer oder Copolymer ist,
wobei, wenn ein Ladezustand (SOC) einer Batterie mit der negativen Elektrodenfolie (100) 100 % beträgt oder eine Spannung der Batterie 3,65 V beträgt, eine Differenzkalorimeter(DSC)-Kurve der negativen Aktivmaterialschicht (10) umfasst:
einen ersten exothermen Peak von 120 °C bis 150 °C, bei dem die negative Aktivmaterialschicht (10) eine Wärmefreisetzung A1 aufweist, die 2 J/g ≤*A1* ≤ 50 J/g erfüllt;
einen zweiten exothermen Peak von 220 °C bis 260 °C, bei dem die negative Aktivmaterialschicht (10) eine Wärmefreisetzung A2 aufweist, die 20 J/g ≤*A2* ≤ 100 J/g erfüllt; und
einen dritten exothermen Peak von 260 °C bis 310 °C, bei dem die negative Aktivmaterialschicht (10) eine Wärmefreisetzung *A3* aufweist, die 200 J/g ≤*A3* ≤ 600 J/g erfüllt,
wobei die DSC-Kurve der negativen Aktivmaterialschicht (10) durch eine DSC-Messung erhalten wird und die Messung durchgeführt wird, indem die negative Aktivmaterialschicht (10) und der Elektrolyt in einem vergoldeten Tiegel in einem Massenverhältnis von 0,78:1 hinzugefügt werden und der vergoldete Tiegel mit einer Heizrate von 5 °C/min von 30 °C auf 450 °C erhitzt wird, und
wobei der Elektrolyt durch Mischen von Ethylencarbonat und Ethylenmethylcarbonat in einem Volumenverhältnis von 3:7 und Hinzufügen von Lithiumhexafluorophosphat zu einer Mischung aus dem Ethylencarbonat und dem Ethylenmethylcarbonat gebildet wird, wobei das Lithiumhexafluorophosphat eine Konzentration von 1 mol/l aufweist.

2. Negative Elektrodenfolie (100) nach Anspruch 1, wobei die Peakformen des ersten exothermen Peaks, des zweiten exothermen Peaks und des dritten exothermen Peaks eine einzelne charakteristische Peakform, eine Peakform mit zwei Schultern oder eine kontinuierliche Peakform oder eine beliebige Kombination davon umfassen.

3. Negative Elektrodenfolie (100) nach Anspruch 1, wobei die Wärmefreisetzung *A1*, die dem ersten exothermen Peak entspricht, und die Wärmefreisetzung *A3*, die dem dritten exothermen Peak entspricht, Folgendes erfüllen: 0,003≤*A1*/*A3*≤0,25.

4. Negative Elektrodenfolie (100) nach Anspruch 1, wobei die Wärmefreisetzung *A2,* die dem zweiten exothermen Peak entspricht, und die Wärmefreisetzung *A3,* die dem dritten exothermen Peak entspricht, Folgendes erfüllen: 0,03*≤A2*/*A3*≤0,5.

5. Negative Elektrodenfolie (100) nach Anspruch 1, wobei ein Partikeldurchmesser *Dv*50 des negativen Aktivmaterials (11) 10 µm≤*Dv* 50≤≤17 µm erfüllt, wobei sich der *Dv*50 auf einen Partikeldurchmesser bezieht, wenn ein kumulativer Volumenanteil bei der Messung einer volumenbasierten Verteilung unter Verwendung eines Laserstreuverfahrens 50 % erreicht.

6. Negative Elektrodenfolie (100) nach Anspruch 1, wobei der spezifische Oberflächenbereich des negativen Aktivmaterials (11) 1,1 m²/g bis 4,5 m²/g erfüllt.

7. Negative Elektrodenfolie (100) nach Anspruch 1, wobei eine Grammkapazität des negativen Aktivmaterials (11) 330 mAh/g bis 360 mAh/g beträgt.

8. Batterie (1000), umfassend:
Elektrolyt (400);
eine positive Elektrodenfolie (2000), die mindestens teilweise in den Elektrolyten eingetaucht ist;
einen Separator (300), der sich an einer Seite der positiven Elektrodenfolie befindet und mindestens teilweise in den Elektrolyten eingetaucht ist; und
die negative Elektrodenfolie (100) nach einem der Ansprüche 1 bis 7, wobei die negative Elektrodenfolie (100) an einer Seite des Separators (300) weg von der positiven Elektrodenfolie (2000) angeordnet und mindestens teilweise in den Elektrolyten (400) eingetaucht ist.

9. Stromverbrauchsvorrichtung (2000), die die Batterie nach Anspruch 8 umfasst.

## Revendications

1. Feuille d'électrode négative (100), comportant un collecteur de courant (20) et une couche de matériau actif négatif (10) disposée sur le collecteur de courant (20), dans laquelle la couche de matériau actif négatif (10) comporte un matériau actif négatif (11) et un liant, dans laquelle le matériau actif négatif (11) est une ou plusieurs parmi une particule de graphite, une particule de carbone molle ou une particule de carbone dure, et dans laquelle le liant est acrylonitrile, fluorure de vinylidène, alcool vinylique, carboxyméthylcellulose, carboxyméthylcellulose de lithium, carboxyméthylcellulose de sodium, méthacryloyle, acide acrylique, acrylate de lithium, acrylamide, amide, imide, acrylate, caoutchouc styrène-butadiène, alginate de sodium, chitosane, éthanediol, monomère, polymère ou copolymère de gomme de guar,
dans laquelle, lorsqu'un état de charge (SOC) d'une batterie avec la feuille d'électrode négative (100) est de 100 % ou qu'une tension de la batterie est de 3,65 V, une courbe de calorimètre différentiel à balayage (DSC) de la couche de matériau actif négatif (10) comporte :
un premier pic exothermique de 120 °C à 150 °C, dans lequel la couche de matériau actif négatif (10) présente une libération de chaleur *A1* satisfaisant 2 J/g ≤ *A1* ≤ 50 J/g ;
un deuxième pic exothermique de 220 °C à 260 °C, dans lequel la couche de matériau actif négatif (10) présente une libération de chaleur *A2* satisfaisant 20 J/g ≤ *A2* ≤ 100 J/g ; et
un troisième pic exothermique de 260 °C à 310 °C, dans lequel la couche de matériau actif négatif (10) présente une libération de chaleur *A3* satisfaisant 200 J/g ≤ *A3* ≤ 600 J/g,
dans laquelle la courbe DSC de la couche de matériau actif négatif (10) est obtenue par un DSC par mesure, et la mesure est réalisée en ajoutant la couche de matériau actif négatif (10) et l'électrolyte dans un creuset plaqué or à un rapport de masse de 0,78:1 et en chauffant le creuset plaqué or de 30 °C à 450 °C à une vitesse de chauffage de 5 °C/min, et
dans laquelle l'électrolyte est formé en mélangeant du carbonate d'éthylène et du carbonate d'éthylméthyle à un rapport volumique de 3:7 et en ajoutant de l'hexafluorophosphate de lithium à un mélange du carbonate d'éthylène et du carbonate d'éthylméthyle, l'hexafluorophosphate de lithium présentant une concentration de 1 mol/l.

2. Feuille d'électrode négative (100) selon la revendication 1, dans laquelle les formes de pic du premier pic exothermique, du deuxième pic exothermique et du troisième pic exothermique comportent une ou toute combinaison d'une forme de pic caractéristique unique, d'une forme de pic à double épaulement ou d'une forme de pic continue.

3. Feuille d'électrode négative (100) selon la revendication 1, dans laquelle la libération de chaleur *A1* correspondant au premier pic exothermique et la libération de chaleur *A3* correspondant au troisième pic exothermique satisfont : 0,003 ≤ *A1*/*A3* ≤ 0,25.

4. Feuille d'électrode négative (100) selon la revendication 1, dans laquelle la libération de chaleur *A2* correspondant au deuxième pic exothermique et la libération de chaleur *A3* correspondant au troisième pic exothermique satisfont : 0,03 ≤ *A2*/*A3* ≤ 0,5.

5. Feuille d'électrode négative (100) selon la revendication 1, dans laquelle un diamètre de particule *Dv*50 du matériau actif négatif (11) satisfait à 10 µm ≤ *Dv*50 ≤ 17 µm, dans laquelle *Dv*50 fait référence à un diamètre de particule lorsqu'une fraction volumique cumulée atteint 50 % dans la mesure d'une distribution basée sur le volume à l'aide d'un procédé de diffusion par laser.

6. Feuille d'électrode négative (100) selon la revendication 1, dans laquelle la surface spécifique du matériau actif négatif (11) satisfait de 1,1 m²/g à 4,5 m²/g.

7. Feuille d'électrode négative (100) selon la revendication 1, dans laquelle une capacité en grammes du matériau actif négatif (11) va de 330 mAh/g à 360 mAh/g.

8. Batterie (1000), comportant :
un électrolyte (400) ;
une feuille d'électrode positive (2000) au moins partiellement immergée dans l'électrolyte ;
un séparateur (300) situé d'un côté de la feuille d'électrode positive et au moins partiellement immergé dans l'électrolyte ; et
la feuille d'électrode négative (100) selon l'une quelconque des revendications 1 à 7, dans laquelle la feuille d'électrode négative (100) est disposée d'un côté du séparateur (300) à l'écart de la feuille d'électrode positive (2000) et au moins partiellement immergée dans l'électrolyte (400).

9. Dispositif de consommation d'électricité (2000) comportant la batterie selon la revendication 8.
